# EUROPÄISCHE PATENTSCHRIFT

(11) **EP 3 428 756 B1**
(45) Veröffentlichungstag und Bekanntmachung des Hinweises auf die Patenterteilung: **19.06.2019**
(21) Anmeldenummer: 17180526.0
(22) Anmeldetag: 10.07.2017
(51) Int. Cl.: G05B 23/02, G06F 21/50

(54) **INTEGRITÄTSÜBERWACHUNG BEI AUTOMATISIERUNGSSYSTEMEN**
INTEGRITY MONITORING IN AUTOMATION SYSTEMS
SURVEILLANCE D'INTÉGRITÉ POUR DES SYSTÈMES D'AUTOMATISATION

(43) Veröffentlichungstag der Anmeldung: 16.01.2019
(73) Patentinhaber: Siemens Aktiengesellschaft, 80333 München (DE)
(72) Erfinder: Falk, Rainer, 85586 Poing (DE); Fries, Steffen, 85598 Baldham (DE)

(56) Entgegenhaltungen:
- EP-A1- 2 980 662
- EP-A1- 3 101 491
- DE-A1- 10 135 586
- DE-A1-102014 117 282
- US-A- 5 621 158

## Beschreibung

### TECHNISCHES GEBIET

Verschiedene Beispiele der Erfindung betreffen im Allgemeinen das Überwachen der Integrität eines industriellen Automatisierungssystems. Verschiedene Beispiele der Erfindung betreffen insbesondere das Überwachen basierend auf einem Vergleich zwischen Zustandsdaten des Automatisierungssystems und Sensordaten, die eine Umweltbeeinflussung des Automatisierungssystems beschreiben. Verschiedene Beispiele der Erfindung betreffen das Überwachen der Integrität, um Beeinträchtigung der Integrität aufgrund von Fremdzugriff festzustellen.

### HINTERGRUND

Die EP 3 101 491 A1 beschreibt ein Sicherheitssystem für eine industrielle Steuerungsinfrastruktur. Dabei wird ein digitaler Daumenabdruck erzeugt, welcher Abschnitte einer Datenstruktur erfasst. Dabei bezeichnet der Daumenabdruck auch Umgebungsdaten, die in Komponenten einer Steuervorrichtung gehalten werden. Dieser digitale Daumenabdruck wird mit einem abgespeicherten Daumenabdruck verglichen, um eine Wahrscheinlichkeit für eine Modifikation oder Verfälschung zu bestimmen.

Die EP 2 980 662 A1 beschreibt die Feststellung einer Bedrohungslage für eine Automatisierungskomponente der Steuerungs- und Feldebene. Dabei wird ein Soll-Programmverhalten mit einem im Betrieb der Automatisierungskomponente ermittelten Ist-Programmverhalten verglichen. Dabei befinden sich in Speicherbereichen Sensordaten, welche ein Ist-Programmverhalten definieren.

Die DE 10 2014 117 282 A1 offenbart ein Automatisierungssystem, welches Betriebsdaten eines Regelsystems mit einer vorbekannten Spezifikation vergleicht.

Die US 5,621,158 A offenbart einen Vergleich zwischen Messwerten von Sensoren mit Referenzwerten. Dabei werden die Referenzwerte abhängig von einem Lastverhältnis, das als Verhältnis einer aktuellen Last zu einer maximalen Last definiert ist, gewählt. Abhängig von dem Vergleich wird das System als normal oder abnormal bewertet.

Die DE 101 35 586 A1 beschreibt die Rekonfiguration eines Sensorsystems, um eine verbesserte Genauigkeit im Falle eines Ausfalls zu erreichen. Dazu misst das Sensorsystem mit einem Sensor System-Zustände eines Anwendungssystems. Ausfallzustände werden aus einem Vergleich der gemessenen System-Zustände mit einem von einem Systemmodell geschätzten Zustand ermittelt.

Mit zunehmender Automatisierung erfolgt eine zunehmende Verbreitung von industriellen Automatisierungssystemen. Beispielsweise werden Automatisierungssysteme bei der Fertigung von Maschinen oder Werkstücken eingesetzt. Automatisierungssysteme können prozesstechnische Anlagen implementieren. Industrielle Automatisierungssysteme werden auch im Bereich Verkehrsüberwachung oder Verkehrssteuerung eingesetzt, beispielsweise im Zusammenhang mit Verkehrsleitsystemen in Städten, in der Gebäudeautomatisierung, beim Bahnverkehr oder im Flugverkehr. Industrielle Automatisierungssysteme können auch bei der Energieerzeugung, zum Beispiel in Kraftwerken oder Umspannwerken, sowie bei der Energieübertragung und Energieverteilung (Smart Grid) verwendet werden.

Moderne Automatisierungssysteme sind geprägt von einem hohen Grad an Konnektivität. Beispielsweise umfassen Automatisierungssysteme typischerweise eine Vielzahl von Komponenten, beispielsweise Sensoren, Aktuatoren, Recheneinheiten oder Steuereinheiten. Diese Komponenten von Automatisierungssystemen sind typischerweise über ein Netzwerk miteinander verbunden und stehen damit in Kommunikationsverbindung. Es ist oftmals auch möglich, dass von außen - beispielsweise über das Internet - auf das Automatisierungssystem zugegriffen wird, oder dass ein Automatisierungssystem über das Internet Daten überträgt, z.B. Diagnosedaten für eine vorausschauende Wartung.

Deshalb besteht im Zusammenhang mit Automatisierungssystemen oftmals die Gefahr von unautorisiertem Fremdzugriff (engl. hacking). Ein solcher unautorisierter Fremdzugriff kann zu Fehlfunktionen, Datenverlust, Funktionseinschränkungen bis hin zum Totalausfall des entsprechenden Automatisierungssystems führen.

Deshalb ist der Schutz der Integrität von Automatisierungssystemen ein erforderliches Ziel, um den zuverlässigen Betrieb zu gewährleisten. Dabei besteht insbesondere ein Bedarf, die Integrität von industriellen Automatisierungssystemen als Ganzes zu schützen, über den Schutz einzelner Teilfunktionen der Automatisierungssysteme hinaus.

In Referenzimplementierungen wird die Beeinträchtigung der Integrität aufgrund von unautorisiertem Fremdzugriff beispielsweise auf Grundlage von Zustandsdaten der IT-Systeme eines Automatisierungssystems überwacht, welche den Betriebszustand des Automatisierungssystems beschreiben. Basierend auf einer Auswertung von solchen Zustandsdaten kann ein Angriff auf die Integrität der IT-Komponenten des Automatisierungssystems festgestellt werden. Zum Beispiel können Unregelmäßigkeiten in den Zustandsdaten erkannt werden. Die Automatisierung der Erkennung von solchen Unregelmäßigkeiten wird im Zusammenhang mit Angriffserkennungswerkzeugen beschrieben (engl. intrusion detection system). Angriffserkennungswerkzeuge suchen gezielt nach bekannten Angriffsmustern, beispielsweise in der Betriebssoftware des Automatisierungssystems oder im Zusammenhang mit Kommunikationsschnittstellen des Automatisierungssystems.

Solche Referenzimplementierungen weisen aber bestimmte Einschränkungen und Nachteile auf. Beispielsweise können solche Referenzimplementierung eine begrenzte Genauigkeit aufweisen. Oftmals können solche Angriffserkennungswerkzeuge lediglich IT-bezogene Angriffe bzw. Manipulationen erkennen.

### KURZE ZUSAMMENFASSUNG DER ERFINDUNG

Deshalb besteht ein Bedarf für verbesserte Techniken, um die Integrität von Automatisierungssystemen zu überwachen. Insbesondere besteht ein Bedarf für Techniken, um Fremdzugriffe auf Automatisierungssysteme zu erkennen. Dabei besteht ein Bedarf für solche Techniken, welche zumindest einige der oben genannten Nachteile und Einschränkungen beheben oder lindern.

Diese Aufgabe wird von den Merkmalen der unabhängigen Patentansprüche gelöst. Die Merkmale der abhängigen Patentansprüche definieren Ausführungsformen.

Ein beispielhaftes Verfahren umfasst das Erhalten von Zustandsdaten eines industriellen Automatisierungssystems. Die Zustandsdaten beschreiben den Betriebszustand des Automatisierungssystems. Das Verfahren umfasst weiterhin das Erhalten von Sensordaten, welche eine Umweltbeeinflussung des Automatisierungssystems beschreiben. Das Verfahren umfasst ferner das Durchführen eines Vergleichs zwischen den Zustandsdaten und den Sensordaten, sowie das Überwachen der Integrität des Automatisierungssystems basierend auf dem Vergleich.

Beispielsweise wäre es möglich, Fremdzugriff auf das Automatisierungssystem zu erkennen und damit verbundene Auswirkungen auf die Integrität zu überwachen. Unautorisierter Fremdzugriff kann erkannt werden.

Zum Beispiel könnte das industrielle Automatisierungssystem ein Kraftwerk, ein Energieverteilnetz, ein Umspannwerk, eine Fertigungslinie für Werkstücke oder Maschinen, eine Raffinerie, eine Pipeline, eine Kläranlage, ein Verkehrsleitsystem, ein medizinisches Gerät o. ä. implementieren. Manchmal wird ein solches Automatisierungssystem auch als Cyberphysikalisches-System (CPS) bezeichnet. Beispiele für Automatisierungssysteme umfassen: eine Industrieanlage; eine Fertigungshalle; ein Umspannwerk; ein Roboter; ein Flurförderfahrzeug; ein autonomes Transportsystem; eine Werkzeugmaschine; eine Fräse; eine Presse; eine prozesstechnische Anlage; und einen 3D Drucker.

Die Zustandsdaten können beispielsweise Log-Dateien einer Betriebssoftware des Automatisierungssystems umfassen. Beispielsweise können die Zustandsdaten aus ein oder mehreren Steuerungen des Automatisierungssystems stammen. Die Zustandsdaten könnten umfassen: ein Selbsttest-Ergebnis einer Betriebssoftware des Automatisierungssystems; Prüfsummen; Speicherabzüge; etc.

Die Sensordaten können von einem oder mehreren Sensoren erhalten werden. Die Sensoren können beispielsweise Teil des Automatisierungssystems sein, d. h. zum Beispiel über eine gemeinsame Kommunikationsschnittstelle mit weiteren Komponenten des Automatisierungssystems in Kommunikationsverbindung stehen. Es wäre in anderen Beispielen aber auch möglich, dass die Sensoren nicht Teil des Automatisierungssystems sind, sondern vielmehr getrennt vorgehalten sind, sodass nicht einfach gleichzeitiger Zugriff sowohl auf das Automatisierungssystem, als auch auf die Sensoren erhalten werden kann.

Die Sensordaten können also indikativ für die Umweltbeeinflussung des Automatisierungssystems sein. Dabei können je nach Art bzw. Typ der Umweltbeeinflussung unterschiedlichste Sensoren verwendet werden. Beispielsweise könnte die Umweltbeeinflussung eine Erwärmung oder Abkühlung der Umgebung des Automatisierungssystems umfassen; in einem solchen Fall wäre es möglich, dass Temperatursensoren verwendet werden. In anderen Beispielen wäre es möglich, dass die Umweltbeeinflussung das Schalten von Ampeln oder Verkehrsführungssystemen im Allgemeinen umfasst; hier könnten zum Beispiel Videodaten, welche die Verkehrsführungssysteme abbilden, als Sensordaten erhalten werden. Im Zusammenhang mit der Energieerzeugung könnten beispielsweise Sensordaten erhalten werden, die indikativ für elektrische Kenngrößen sind, etwa Spannung oder Stromfluss oder Phasenverschiebung.

Durch das Durchführen des Vergleichs zwischen den Zustandsdaten und den Sensordaten kann insbesondere eine Abweichung der Umweltbeeinflussung von einer erwarteten Referenz erkannt werden. Eine solche Abweichung der Umweltbeeinflussung kann zum Beispiel auftreten, wenn sich Randbedingungen der Umweltbeeinflussung, die außerhalb des Automatisierungssystems begründet sind, verändern. In einem solchen Fall ist nicht notwendigerweise eine Beeinträchtigung der Integrität zu detektieren. Es wäre aber auch möglich, dass eine solche Abweichung der Umweltbeeinflussung von der Referenz aufgrund von beispielsweise unautorisiertem Fremdzugriff auf die Integrität des Automatisierungssystems auftritt. Dann kann durch Überwachung der Abweichung der unautorisierte Fremdzugriff festgestellt werden.

Durch den Vergleich zwischen den Zustandsdaten und den Sensordaten kann ein besonders hoher Grad an Zuverlässigkeit bei der Überwachung der Integrität erreicht werden. Durch ein solches gemeinsames Analysieren kann insbesondere eine Positiv-Bestätigung der Integrität ermöglicht werden. Außerdem kann die Integrität basierend auf einer Vielzahl von Datenquellen überwacht werden, sodass insgesamt die Zuverlässigkeit zunimmt. Fremdzugriff kann zuverlässig erkannt werden. Insbesondere kann eine Auswirkung des Fremdzugriffs auf die Integrität erkannt werden. Eine Beeinträchtigung der Integrität kann erkannt werden. Unautorisierter Fremdzugriff kann erkannt werden. Es sind weiterhin auch Manipulationen an der analogen Ansteuerung eines Aktors oder an Sensoren des Automatisierungssystems erkennbar, z.B. eine Manipulation einer Ansteuerelektronik. Dadurch wird eine neue Qualität der Integritätsüberwachung erreicht.

In einem Beispiel könnten die Zustandsdaten einen Zustand einer Betriebssoftware des Automatisierungssystems umfassen. Derart können IT-bezogene Informationen über das Automatisierungssystem erhalten werden. Insbesondere kann der Zustand der Betriebssoftware charakteristisch für den Betriebszustand des Automatisierungssystems sein.

Die Zustandsdaten können zumindest ein Element der folgenden Gruppe umfassen: eine Komponentenregistrierung einer Vielzahl von aktiven Komponenten des Automatisierungssystems; eine Komponentenaktivität einer Vielzahl von Komponenten des Automatisierungssystems; ein Fehlerzustand einer Betriebssoftware des Automatisierungssystems; ein Parameter einer Kommunikationsschnittstelle des Automatisierungssystems; sowie eine Ressourcenbelegung von Computerhardware des Automatisierungssystems.

Mittels solcher und weiterer Arten von Zustandsdaten kann der Zustand der Betriebssoftware des Automatisierungssystems zuverlässig und umfangreich abgebildet werden. Durch das Berücksichtigen von mehreren komplementären Arten von Zustandsdaten kann insbesondere ein individueller Angriff auf einzelne Funktionsblöcke des Automatisierungssystems erkannt werden. Dies ist in der Erfahrung begründet, dass ein gleichzeitiger Angriff auf mehrere oder viele Funktionsblöcke mit einem gefälschten, jedoch kohärenten bzw. konsistenten Verhalten nur selten auftritt. Deshalb kann eine Beeinträchtigung der Integrität etwa aufgrund von Fremdzugriff besonders zuverlässig erkannt werden.

Solche und weitere Arten von Zustandsdaten können insbesondere auch indirekt indikativ sein für eine Aktivität von Aktuatoren des Automatisierungssystems, welche die Umweltbeeinflussung bewirken. Manchmal kann es erstrebenswert sein, die Aktivität der Aktuatoren des Automatisierungssystems besonders explizit bei dem Überwachen der Integrität zu berücksichtigen. In einem solchen Fall ist es hilfreich, ferner Steuerdaten für ein oder mehrere Aktuatoren des Automatisierungssystems zu erhalten, wobei diese Aktuatoren die Umweltbeeinflussung bewirken. Dann wird der Vergleich zwischen den Zustandsdaten, den Sensordaten sowie den Steuerdaten durchgeführt.

Derart ist es möglich, eine bestimmte unerwartete Umweltbeeinflussung besonders gut zum Beispiel auch auf Fehlfunktionen der Aktuatoren zurückzuführen; Fehlfunktionen der Aktuatoren müssen nicht notwendigerweise durch Fremdzugriff entstehen, sondern können auch durch eine Beschädigung etc. hervorgerufen werden. Damit kann insgesamt die Genauigkeit des Überwachens Integrität gesteigert werden. Insbesondere kann hierbei die Integrität des Systems, auch unabhängig von einem Fremdzugriff, überwacht werden.

In manchen Beispielen ist es möglich, dass der Vergleich eine Abweichung der Umweltbeeinflussung von einer Referenz berücksichtigt. Insbesondere kann im Rahmen des Vergleichs also eine Abweichung vom Normverhalten festgestellt werden. Eine solche Abweichung vom Normverhalten kann besonders einfach ermittelt werden - insbesondere gegenüber Referenzimplementierungen, bei welchen die Umweltbeeinflussung umfassend vorhergesagt werden soll. Aufgrund der Komplexität von Automatisierungssystemen kann es manchmal nicht oder nur eingeschränkt möglich sein, die Umweltbeeinflussung umfassend vorherzusagen. In solchen Szenarien kann es dann hilfreich sein, wenn anstatt einer Vorhersage der Umweltbeeinflussung lediglich eine Abweichung der Umweltbeeinflussung von der Referenz berücksichtigt wird. Es kann also eine Anomaliedetektion durchgeführt werden.

Dabei wäre es zum Beispiel möglich, dass die Referenz basierend auf einem vorgegebenen deterministischen Modell und als Funktion der Zustandsdaten bestimmt wird. Zum Beispiel könnte das deterministische Modell auf Grundlage von einfachen Annahmen, die zum Beispiel fest vorgegeben und in einem Speicher hinterlegt sind, die Referenz vorgeben. Ein solches Modell könnte zum Beispiel vorhersagen, dass bei einer großen Zahl von Speicherzugriffen einer Betriebssoftware des Automatisierungssystems typischerweise eine erhöhte Anzahl von pro Zeiteinheit fertig gestellten Werkstücken erhalten wird. Die Anzahl von pro Zeiteinheit fertig gestellten Werkstücken könnte durch einen geeigneten Sensor überprüft werden; derart könnte aus einer Abweichung zwischen Sensordaten und Zustandsdaten eine Beeinträchtigung der Integrität ermittelt werden. Ein weiteres Beispiel für ein solches Modell betrifft beispielsweise die Häufigkeit von Regelvorgängen beim Betrieb von Gasturbinen; wird eine Gasturbine häufig zwischen unterschiedlichen Leistungswerten geregelt, könnte die Temperatur in einem Lager der Gasturbine ansteigen. Der Temperaturverlauf im Bereich des Lagers der Gasturbine kann durch einen Temperatursensor überwacht werden und es kann dieser vorhergesagte Zusammenhang im Rahmen des Modells durch den Vergleich zwischen den Zustandsdaten und den Sensordaten überprüft werden. Insbesondere wenn ein Simulationsmodell des Automatisierungssystems, das auch als digitaler Zwilling bezeichnet wird, vorliegt, so kann das Simulationsmodell im laufenden Betrieb als Referenz verwendet werden. Dies ist insbesondere vorteilhaft, da ein bei der Konstruktion des Automatisierungssystems erstelltes Simulationsmodell (digitaler Zwilling) zur Integritätsüberwachung im Betrieb weiterverwendet werden kann.

Dabei wäre es zum Beispiel möglich, dass das vorgegebene Modell als Funktion der Zustandsdaten einen Plausibilitätsbereich der Sensordaten indiziert. Dies bedeutet, dass anstatt einer genauen Vorhersage der zu erwartenden Sensordaten vielmehr ein gewisser Bereich von akzeptablen Sensordaten verwendet wird. Dies kann es besonders gut ermöglichen, den normalen Betrieb von einer Beeinträchtigung der Integrität etwa tisierungssystems (100);

Das Verfahren könnte auch das Erhalten von Referenz-Zustandsdaten des Automatisierungssystems in einer Lernphase umfassen. Die Referenz-Zustandsdaten können dabei den Betriebszustand des Automatisierungssystems beschreiben. Das Verfahren kann auch das Erhalten von Referenz-Sensordaten in der Lernphase umfassen. Auch die Referenz-Sensordaten können die Umweltbeeinflussung des Automatisierungssystems beschreiben. Dann kann ein empirisches Modell der Umweltbeeinflussung bestimmt werden, basierend auf dem Durchführen eines Vergleichs zwischen den Referenz-Zustandsdaten und den Referenz-Sensordaten. Es ist dann möglich, die Referenz basierend auf dem empirischen Modell zu bestimmen.

In einem solchen Ansatz kann es möglich sein, flexibel eine große Anzahl von Quellen für Zustandsdaten und Sensordaten durch das Modell miteinander zu verknüpfen. Insbesondere ist es möglich, insbesondere auch solche Quellen miteinander zu verknüpfen, für die nicht einfach ein deterministisches Modell abgeleitet werden kann - besonders modulare Systeme können so unterstützt werden. So etwas kann ferner zum Beispiel bei schwach korrelierten Daten der Fall sein. So etwas kann ferner der Fall sein, wenn eine große Dimensionalität an unterschiedlichen Daten vorhanden ist. So etwas kann ferner der Fall sein, wenn die Sensordaten beispielsweise stark rauschbehaftet sind und das Signal-zu-Rauschverhältnis der Sensordaten gering ist.

Zum Beispiel könnte das Bestimmen des empirischen Modells mittels Techniken des maschinellen Lernens erfolgen. Zum Beispiel könnte ein künstliches neuronales Netzwerk trainiert werden, etwa mittels Rückwärtspropagation. Es könnte auch ein Kalman-Filter verwendet werden. Derart kann es ohne großen Aufwand und auch flexibel auf den Einzelfall - etwa eines modularen Systems, das häufig erweitert oder abgeändert wird - abgestimmt ermöglicht werden, das Modell bzw. die Referenz zuverlässig zu bestimmen.

Die Lernphase kann zum Beispiel im Zusammenhang mit einem überwachten Betrieb durchgeführt werden. Beispielsweise wäre es möglich, dass während der Lernphase ein Zugriff auf das Automatisierungssystem von externen Anlagen nicht möglich ist. Derart kann sichergestellt werden, dass bereits die Referenz-Zustandsdaten oder die Referenz-Sensor Daten nicht gefälscht werden. Es wäre auch möglich, dass die Lernphase kontinuierlich über den Betrieb des Automatisierungssystems wiederholt wird. Derart könnte eine plötzliche Abweichung gegenüber der Referenz etwa aufgrund des Fremdzugriffs erkannt werden. Weiterhin wird vorgeschlagen, bei einem autorisierten Zugriff auf eine oder mehrere Komponenten des Automatisierungssystems, z.B. einer Änderung der Projektierung (Konfigurationsdaten), bei einer Rekonfiguration einer Produktionsanlage (Plug-and-Work), oder bei einer Aktualisierung einer Gerätefirmware, das Referenz-Modell zu aktualisieren. Weiterhin wird vorgeschlagen, während eines solchen autorisierten Zugriffs das erfindungsgemäße Verfahren zur Integritätsüberwachung des Automatisierungssystems vorübergehend anzuhalten. In einer anderen Variante erfolgt während eines solchen autorisierten Zugriffs das erfindungsgemäße Verfahren eine Überwachung gemäß eines zweiten Referenz-Modells. Die Auswahl des Referenz-Modells bzw. das temporäre Anhalten kann automatisch erfolgen, indem die Betriebsart des Automatisierungssystems ausgewertet wird (z.B. operativer Betriebsmodus, Wartungsmodus, Fehlermodus).

Es wäre in verschiedenen Beispielen auch möglich, dass der Betrieb eines weiteren industriellen Automatisierungssystems überwacht wird. Dann könnte die Referenz basierend auf dem Überwachen des Betriebs des weiteren industriellen Automatisierungssystems bestimmt werden. Beispielsweise könnten auch für das weitere industrielle Automatisierungssystem entsprechende Zustandsdaten und Sensordaten erhalten werden und ein Vergleich zwischen den Zustandsdaten den Sensordaten des weiteren industriellen Automatisierungssystems durchgeführt werden.

Mittels solcher Techniken kann eine Vernetzung zwischen unterschiedlichen Automatisierungssystemen derart ausgenutzt werden, dass die Kompromittierung eines einzelnen Automatisierungssystems aus dieser Gruppe von Automatisierungssystemen durch einen Vergleich mit den übrigen Automatisierungssystemen erkannt werden kann.

Das Durchführen des Vergleichs zwischen den Zustandsdaten und den Sensordaten kann weiterhin das Durchführen einer Anomaliedetektion von mit den Zustandsdaten korrelierten Sensordaten umfassen. Dies bedeutet, dass im Rahmen einer zum Beispiel Maschinen-trainierten Anomaliedetektion eine Abweichung eines erwarteten Musters der Sensordaten auf Grundlage der Zustandsdaten erkannt werden kann.

Wenn eine Beeinträchtigung der Integrität festgestellt wird und / oder wenn Fremdzugriff auf die Integrität des Automatisierungssystems festgestellt wird, können verschiedene Maßnahmen ergriffen werden. Zum Beispiel könnte ein Signal über eine Benutzerschnittstelle ausgegeben werden, beispielsweise ein Schaltsignal oder ein Alarmsignal. Das Automatisierungssystemen oder zumindest Komponenten des Automatisierungssystems können automatisch oder nach Bestätigung durch das Bedienpersonal in einen sicheren Zustand bzw. einen Schutzzustand überführt werden. Es könnte auch eine Protokolldatei erstellt werden, in Abhängigkeit des Überwachens. Die Protokolldatei kann dabei einen Status des Überwachens mit Seriennummern von Produkten des Automatisierungssystems korrelieren. Dadurch kann auch nachträglich bei einem Produkt überprüft werden, ob die Integrität der Produktionsmaschinen während der Herstellung dieses Produkts erfüllt war.

In einem Beispiel umfasst ein Computerprogrammprodukt Programm-Code, der von mindestens einem Prozessor ausgeführt werden kann. Das Ausführen des Programm-Codes bewirkt, dass der mindestens eine Prozessor ein Verfahren ausführt. Das Verfahren umfasst das Erhalten von Zustandsdaten eines industriellen Automatisierungssystems. Die Zustandsdaten beschreiben den Betriebszustand des Automatisierungssystems. Das Verfahren umfasst weiterhin das Erhalten von Sensordaten, welche eine Umweltbeeinflussung des Automatisierungssystems beschreiben. Das Verfahren umfasst ferner das Durchführen eines Vergleichs zwischen den Zustandsdaten und den Sensordaten sowie das Überwachen der Integrität des Automatisierungssystems basierend auf dem Vergleich.

In einem Beispiel umfasst ein Computerprogramm Programm-Code, der von mindestens einem Prozessor ausgeführt werden kann. Das Ausführen des Programm-Codes bewirkt, dass der mindestens eine Prozessor ein Verfahren ausführt. Das Verfahren umfasst das Erhalten von Zustandsdaten eines industriellen Automatisierungssystems. Die Zustandsdaten beschreiben den Betriebszustand des Automatisierungssystems. Das Verfahren umfasst weiterhin das Erhalten von Sensordaten, welche eine Umweltbeeinflussung des Automatisierungssystems beschreiben. Das Verfahren umfasst ferner das Durchführen eines Vergleichs zwischen den Zustandsdaten und den Sensordaten sowie das Überwachen der Integrität des Automatisierungssystems basierend auf dem Vergleich.

In einem Beispiel umfasst eine Steuereinheit mindestens einen Prozessor, der eingerichtet ist, um die folgenden Schritte auszuführen: Erhalten von Zustandsdaten eines industriellen Automatisierungssystems, wobei die Zustandsdaten den Betriebszustand des Automatisierungssystems beschreiben; und Erhalten von Sensordaten, die eine Umweltbeeinflussung des Automatisierungssystems beschreiben; und Durchführen eines Vergleichs zwischen den Zustandsdaten und den Sensordaten; und basierend auf dem Vergleich: Überwachen der Integrität des Automatisierungssystems.

Die oben beschriebenen Beispiele können in weiteren Beispielen miteinander kombiniert werden.

### KURZE BESCHREIBUNG DER FIGUREN

FIG. 1 illustriert schematisch ein Automatisierungssystem gemäß verschiedener Beispiele.
FIG. 2 illustriert schematisch eine Steuereinheit eines Automatisierungssystems gemäß verschiedener Beispiele.
FIG. 3 illustriert schematisch eine Steuereinheit gemäß verschiedener Beispiele.
FIG. 4 ist ein Flussdiagramm eines beispielhaften Verfahrens.
FIG. 5 illustriert schematisch das Erhalten von Zustandsdaten, Steuerdaten sowie Sensordaten gemäß verschiedener Beispiele.
FIG. 6 illustriert schematisch das Vergleichen von Zustandsdaten, Steuerdaten sowie Sensordaten mittels eines Modells gemäß verschiedener Beispiele.
FIG. 7 illustriert einen schematischen Zeitverlauf einer von beispielhaften Zustandsdaten beschriebenen Komponentenaktivität einer Komponente eines Automatisierungssystems sowie einer Umweltbeeinflussung des Automatisierungssystems, die mit der Komponentenaktivität korreliert.
FIG. 8 illustriert schematisch Referenz-Zustandsdaten, Referenz-Steuerdaten sowie Referenz-Sensordaten gemäß verschiedener Beispiele.
FIG. 9 illustriert schematisch Zustandsdaten, Steuerdaten sowie Sensordaten von mehreren Automatisierungssystemen gemäß verschiedener Beispiele.

### DETAILLIERTE BESCHREIBUNG VON AUSFÜHRUNGSFORMEN

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Nachfolgend wird die vorliegende Erfindung anhand bevorzugter Ausführungsformen unter Bezugnahme auf die Zeichnungen näher erläutert. In den Figuren bezeichnen gleiche Bezugszeichen gleiche oder ähnliche Elemente. Die Figuren sind schematische Repräsentationen verschiedener Ausführungsformen der Erfindung. In den Figuren dargestellte Elemente sind nicht notwendigerweise maßstabsgetreu dargestellt. Vielmehr sind die verschiedenen in den Figuren dargestellten Elemente derart wiedergegeben, dass ihre Funktion und genereller Zweck dem Fachmann verständlich wird. In den Figuren dargestellte Verbindungen und Kopplungen zwischen funktionellen Einheiten und Elementen können auch als indirekte Verbindung oder Kopplung implementiert werden. Eine Verbindung oder Kopplung kann drahtgebunden oder drahtlos implementiert sein. Funktionale Einheiten können als Hardware, Software oder eine Kombination aus Hardware und Software implementiert werden.

Nachfolgend werden Techniken beschrieben, um die Integrität von industriellen Automatisierungssystem zu überwachen. Es können unterschiedliche Gründe vorliegen, die eine Beeinträchtigung der Integrität bewirken. Ein beispielhafter Grund für die Beeinträchtigung der Integrität ist Fremdzugriff auf das entsprechende Automatisierungssystem, also insbesondere unautorisierter Fremdzugriff.

Die hierin beschriebenen Techniken beruhen auf einer kombinierten Überwachung von Zustandsdaten, welche einen Betriebszustand des Automatisierungssystems beschreiben, sowie von Sensordaten, die eine Umweltbeeinflussung des Automatisierungssystems beschreiben. Beispielsweise kann aus den Zustandsdaten die erwartete Umweltbeeinflussung im Normalfall abgeleitet werden. Solche Modellierungsinformationen können dann genutzt werden, um einen Abgleich des Ist-Verhaltens mit dem erwarteten Verhalten zu realisieren und darüber Integritätsänderungen festzustellen.

Die hierin beschriebenen Techniken beruhen in verschiedenen Beispielen darauf, Sensordaten und Zustandsdaten - die beispielsweise IT-bezogen sind - gemeinsam zu berücksichtigen und auszuwerten. Es kann eine Überprüfung auf Konsistenz bzw. Plausibilität aus einem Vergleich der Sensordaten mit den Zustandsdaten erfolgen. Dadurch ergibt sich eine neue Qualität der Integritätsüberwachung, da zum Beispiel auch Manipulationen an Sensoren oder Aktuatoren erkannt werden können. Weiterhin wird eine hohe Robustheit erreicht, da für einen unbemerkten Angriff eine Vielzahl von Integritätsdaten auf unterschiedlichen Systemen gleichzeitig konsistent manipuliert werden müssten. Weiterhin können unterschiedliche Arten der Integritätsbeeinträchtigung - beispielsweise Manipulation von Sensoren oder Aktuatoren, Manipulation der Verkabelung, Manipulation von Konfigurationsdaten, Manipulation von Firmware, Manipulation der Steuerungskommunikation, etc. - gemeinsam erfasst und bearbeitet werden. Dadurch können Beeinträchtigungen der Integrität von Automatisierungssystemen von unterschiedlicher Art erkannt werden. Die hierin beschriebenen Techniken zur Überwachung der Integrität beziehen sich dabei insbesondere nicht nur auf spezielle IT-Teilfunktionen von Komponenten eines Automatisierungssystems, sondern betreffen einen umfassenden Ansatz.

Die hierin beschriebenen Techniken können flexibel skaliert werden. Erweiterbarkeit ist gegeben. Flexibel können je nach Bedarf zusätzliche Sensordaten und/oder Zustandsdaten berücksichtigt werden. Auch können kritische Bereiche eines Automatisierungssystems mit höherem Aufwand überwacht werden, als vergleichsweise unkritische Bereiche. Zum Beispiel könnten für kritische Bereiche mehr Sensordaten oder Zustandsdaten erhalten werden, etwa pro Zeiteinheit.

Die hierin beschriebenen Techniken ermöglichen auch das Nachrüsten von bestehenden Automatisierungssystemen. Zum Beispiel könnten gezielt zusätzliche Sensoren zum Bereitstellen von Sensordaten verwendet werden. Dies ermöglicht es, grundsätzlich ungeschützte Betriebssoftware, Automatisierungskomponenten und Werkzeugmaschinen bzw. Produktionssysteme weiter zu verwenden. Es können im Allgemeinen Komponenten eines Automatisierungssystems weiterverwendet werden, die selbst keinen oder nur einen unzureichenden Schutz vor Fremdzugriff aufweisen.

Auf Grundlage der vorliegenden Techniken wäre es beispielsweise möglich, eine Protokolldatei zu erzeugen, welche das Ergebnis der Überwachung protokolliert. Beispielsweise könnten Zeitstempel verwendet werden. Diese Informationen könnten dann dazu genutzt werden, Chargen von erzeugten Produkten des Automatisierungssystems in Bezug auf Beeinträchtigung der Integrität zu überwachen. Derart lässt sich auch im Nachgang überprüfen, ob die Integrität von einzelnen Chargen von Produkten beeinflusst sein könnte, etwa aufgrund eines unzulässigen oder sogar unautorisierten Fremdzugriffs.

Ein unautorisierter Fremdzugriff ist oftmals dadurch gekennzeichnet, dass eine unzulässige Modifikation eines Automatisierungssystems erfolgt. Dies kann auch durch Benutzer erfolgen, die eine Zugangsberechtigung, z.B. zu einem Servicemodus, zu einer Komponente des Systems haben und z.B. die Firmware oder die Projektierungsdaten einer Komponente modifizieren können. Die erfindungsgemäße Lösung verbessert die Resilience, da auch unzulässige Änderungen der Anlagenkonfiguration erkennbar sind, die von Servicetechnikern oder über schwach oder nicht geschützte Serviceschnittstellen erfolgen.

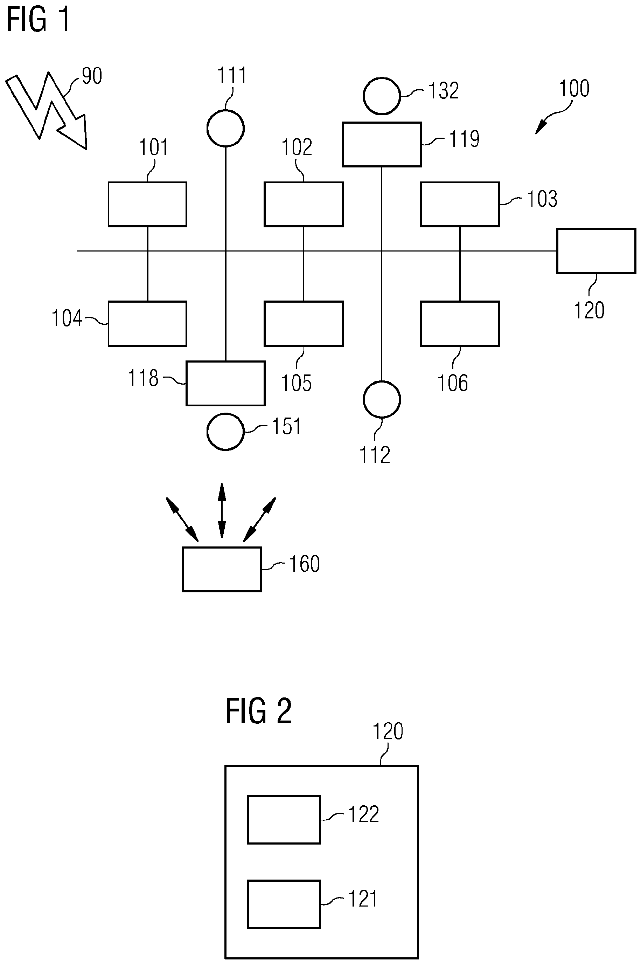

FIG. 1 illustriert schematisch Aspekte in Bezug auf ein Automatisierungssystem 100. Das Automatisierungssystem 100 umfasst eine Vielzahl von Komponenten 101 - 106,111 - 112, 18 - 119, 120. Die Komponenten können auch als sogenannte Internet der Dinge (engl. Internet of Things, IoT)-Geräte bezeichnet werden.

Beispielsweise könnten die Komponenten 101 - 106 Aktuatoren implementieren, die eine Umweltbeeinflussung hervorrufen. Eine solche Umweltbeeinflussung könnte zum Beispiel der Betrieb einer Fertigungslinie sein oder die Steuerung von Verkehrsleitsystemen.

Beispielsweise könnten die Komponenten 111 - 112 Sensoren bezeichnen, welche die Umweltbeeinflussung der Aktuatoren 101 - 106 zumindest teilweise vermessen.

Beispielsweise könnten die Komponenten 118 - 119 Steuerfunktionalität implementieren, die ein oder mehrere der weiteren Komponenten 101 - 106, 111 - 112 steuern; dies bedeutet, dass die Komponenten 118 - 119 Ressourcen einer Computerhardware bereit stellen können. Auch eine zentrale Steuereinheit 120 ist vorgesehen.

Im Zusammenhang mit FIG. 1 sind außerdem auch externe Sensoren 151, 152 dargestellt; diese Sensoren 151, 152. insoweit nicht Teil des Automatisierungssystems 100, da sie nicht in einer Kommunikationsverbindung mit den übrigen Komponenten 101 - 106, 111 - 112, 118 - 120 stehen. Solche Sensoren 151, 152 könnten beispielsweise speziell mit der Zielsetzung der Integritätsüberwachung installiert werden und zum Beispiel physikalisch geschützt angebracht werden. Dies hat den Vorteil, dass ein solcher Sensor 151, 152 nicht von einer kompromittierten Automatisierungskomponente über die Kommunikationsverbindung manipuliert werden kann. In einer Variante kann diesen systemunabhängigen Sensoren eine andere Gewichtung bei der Auswertung gegeben werden.

In FIG. 1 ist dargestellt, dass ein Fremdzugriff 90 auf die Integrität des Automatisierungssystems 100 erfolgen kann. Beispielsweise könnte Ziel des Fremdzugriffs 90 eine Beeinträchtigung der Funktionsweise des Automatisierungssystems 100 sein. Der Fremdzugriff 90 kann unzulässig oder sogar unautorisiert sein.

Nachfolgend werden Techniken beschrieben, die es ermöglichen, einen solchen Fremdzugriff 90 zu erkennen und gegebenenfalls abzuwehren.

Entsprechende Logik kann zum Beispiel im Zusammenhang mit einer Steuereinheit 160 implementiert sein. Die Steuereinheit 160 ist in dem Szenario der FIG. 1 wiederum nicht Teil des Automatisierungssystems 100. Zum Beispiel könnte die Steuerung 160 Teil eines Backend-Systems sein. Zum Beispiel könnte Cloud-Computing oder Edge-Computing zum Betrieb der Steuereinheit 160 verwendet werden.

FIG. 2 illustriert Aspekte in Bezug auf die zentrale Steuereinheit 120. In manchen Beispielen könnte auch die Steuereinheit 120 eingerichtet sein, um die Überwachung der Integrität zu implementieren. Die Steuereinheit 120 umfasst mindestens einen Prozessor 121, beispielsweise einen Mehrkern-Prozessor. Ein Speicher 122 ist vorgesehen. Es könnte Programm-Code in dem Speicher 122 gespeichert sein. Der Prozessor 121 kann den Programm-Code aus dem Speicher 122 laden und ausführen. Das Ausführen des Programm-Codes kann bewirken, dass die zentrale Steuereinheit 120 Techniken im Zusammenhang mit einer oder mehreren der folgenden Elemente ausführt: Erhalten und/oder Analysieren von Zustandsdaten des Automatisierungssystems 100; Erhalten und/oder Analysieren von Sensordaten, die eine Umweltbeeinflussung des Automatisierungssystems beschreiben; Durchführen eines Vergleichs zwischen den Zustandsdaten und den Sensordaten; und Überwachen der Integrität des Automatisierungssystems; und Überwachen von Fremdzugriff auf Automatisierungssystem, etwa mit dem Ziel, die Integrität zu beeinträchtigen bzw. zu verletzen.

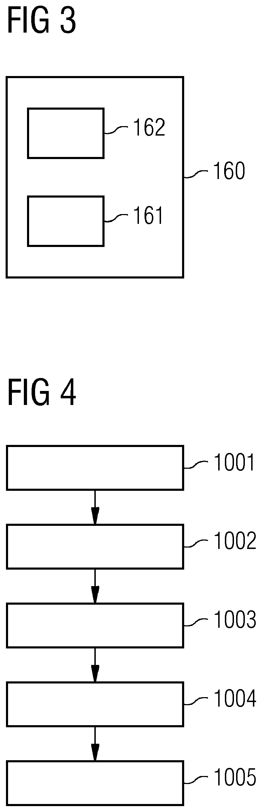

FIG. 3 illustriert Aspekte in Bezug auf die Backend-Steuereinheit 160. Die Steuereinheit 160 umfasst mindestens einen Prozessor 161, beispielsweise einen Mehrkern-Prozessor. Ein Speicher 162 ist vorgesehen. Es könnte Programm-Code in dem Speicher 162 gespeichert sein. Der Prozessor 161 kann den Programm-Code aus dem Speicher 162 laden und ausführen. Das Ausführen des Programm-Codes kann bewirken, dass die Steuereinheit 160 Techniken im Zusammenhang mit einem oder mehreren der folgenden Elemente ausführt: Erhalten und/oder Analysieren von Zustandsdaten des Automatisierungssystems 100; Erhalten und/oder Analysieren von Sensordaten, die eine Umweltbeeinflussung des Automatisierungssystems beschreiben; Durchführen eines Vergleichs zwischen den Zustandsdaten und den Sensordaten; und Überwachen der Integrität des Automatisierungssystems.

FIG. 4 ist ein Flussdiagramm eines beispielhaften Verfahrens. Beispielsweise könnte das Verfahren gemäß dem Beispiel der FIG. 4 von der Steuereinheit 120 oder von der Steuereinheit 160 ausgeführt werden.

Zunächst werden in Block 1001 Zustandsdaten erhalten. Die Zustandsdaten beschreiben dem Betriebszustand eines Automatisierungssystems. Beispielsweise könnten die Zustandsdaten aus ein oder mehreren Steuereinheiten des Automatisierungssystems erhalten werden oder auch direkt von Aktuatoren oder Sensoren des Automatisierungssystems.

Zum Beispiel könnten die Zustandsdaten einen Zustand einer Betriebssoftware des Automatisierungssystems umfassen. Die Zustandsdaten könnten zumindest ein Element der folgenden Gruppe umfassen: eine Komponentenregistrierung einer Vielzahl von aktiven Komponenten des Automatisierungssystems; und eine Komponentenaktivität einer Vielzahl von Komponenten des Automatisierungssystems; ein Fehlerzustand einer Betriebssoftware des Automatisierungssystems; ein Parameter einer Kommunikationsschnittstelle des Automatisierungssystems; und eine Ressourcenbelegung von Computerhardware des Automatisierungssystems.

Beispielsweise könnte die Komponentenregistrierung alle aktiven Komponenten, die an einer zentralen Steuereinheit des Automatisierungssystems registriert sind, auflisten. Abgemeldete Komponenten können entsprechend gelistet werden. Dadurch kann eine Übersicht erhalten werden, welche Komponenten des Automatisierungssystems grundsätzlich eine Umweltbeeinflussung vornehmen können.

Beispielsweise könnte die Komponentenaktivität einen Auslastungsgrad oder einen Betriebszyklus von verschiedenen Komponenten bezeichnen. Beispielsweise könnte im Zusammenhang mit Aktuatoren eine Amplitude der Aktivität beschrieben werden. Derart kann es möglich sein, eine Stärke der Umweltbeeinflussung aufgrund von Aktuatoren des Automatisierungssystems abzuschätzen.

Der Fehlerzustand kann beispielsweise einer Log-Datei der Betriebssoftware entsprechen. Darin können zum Beispiel unerwartete Abbrüche von Programmsoftware hinterlegt sein. Es könnten auch fehlerhafte Speicherzugriffe hinterlegt sein. Es könnten auch abgewehrte Fremdzugriffe hinterlegt sein. Es könnten auch alle ausgeführten Prozesse dargestellt sein.

Der Parameter der Kommunikationsschnittstelle des Automatisierungssystems kann zum Beispiel eine Aktivität der Kommunikationsschnittstelle und mögliche Kommunikationspartner indizieren. Beispielsweise könnte die Menge an ausgetauschten Daten hinterlegt sein. Beispielsweise könnte eine verwendete Verschlüsselung indiziert sein. Beispielsweise könnten die aktiven Kommunikationsverbindungen und die assoziierten Anwendungen hinterlegt sein.

Die Ressourcenbelegung der Computerhardware kann beispielsweise eine Auslastung des Speichers oder eine Auslastung von Festspeicher oder eine Auslastung von verfügbaren Prozessoren beschreiben.

In Block 1002 werden Sensordaten erhalten. Beispielsweise können die Sensordaten von ein oder mehreren Sensoren des Automatisierungssystems erhalten werden. Alternativ oder zusätzlich wäre es auch möglich, dass die Sensordaten von ein oder mehreren externen Sensoren erhalten werden. Die Sensordaten können eine physikalische Messgröße bzw. Observable quantifizieren. Die Messgröße kann eine Umweltbeeinflussung des Automatisierungssystems beschreiben. Beispielsweise könnte ein oder mehrere der folgenden physikalischen Observablen durch die Sensordaten beschrieben werden: Temperatur; Verkehrsfluss; erzeugte Produkte; Ausschuss; Druck; Volumen; Geschwindigkeit; Position; Strom; Spannung; erzeugte elektrische Energie; etc.

Dann erfolgt in Block 1003 das Durchführen eines Vergleichs zwischen den Zustandsdaten aus Block 1001 und den Sensordaten aus Block 1002. Beispielsweise könnte eine Korrelation zwischen den Zustandsdaten und den Sensordaten durchgeführt werden. Es könnte eine Fusion der Sensordaten und Zustandsdaten durchgeführt werden.

Grundsätzlich könnten im Rahmen des Vergleichs in Block 1003 auch weitere Daten berücksichtigt werden. Zum Beispiel wäre es möglich, auch Steuerdaten für ein oder mehrere Aktuatoren des Automatisierungssystems, die die Umweltbeeinflussung bewirken, zu erhalten. Dann könnten beim Vergleich in Block 1003 auch die Steuerdaten berücksichtigt werden

Beim Vergleich könnte eine Abweichung der Umweltbeeinflussung von einer Referenz berücksichtigt werden. Diese Referenz kann in Abhängigkeit der Zustandsdaten bestimmt werden. Dabei könnte zum Beispiel ein deterministisches Modell oder auch ein empirisches Modell verwendet werden.

Abschließend können in Block 1005 (optional) Gegenmaßnahmen und/oder Warnungen in Abhängigkeit von dem Überwachen aus Block 1004 ausgelöst werden. Beispielsweise könnte in Abhängigkeit des Überwachens eine Protokolldatei erstellt werden, die den Status des Überwachens mit Seriennummern von Produkten des Automatisierungssystems korreliert. Derart könnte auch im Nachgang überprüft werden, ob möglicherweise einzelne Produkte oder Produktchargen von der Beeinträchtigung der Integrität beeinflusst waren. Es wäre auch möglich, in Abhängigkeit von dem Überwachen eine Warnung über eine Benutzerschnittstelle auszugeben und/oder den Betrieb des Automatisierungssystems automatisch in einen Schutzzustand zu überführen. Beispielsweise könnte es möglich sein, im Schutzzustand die Umweltbeeinflussung einzuschränken, sodass Personen etc. nicht zu Schaden kommen können. Es wäre auch möglich, eine Kommunikationsschnittstelle des Automatisierungssystems 100 zu deaktivieren, sodass ein möglicher Fremdzugriff nicht aktiv durchgeführt werden kann.

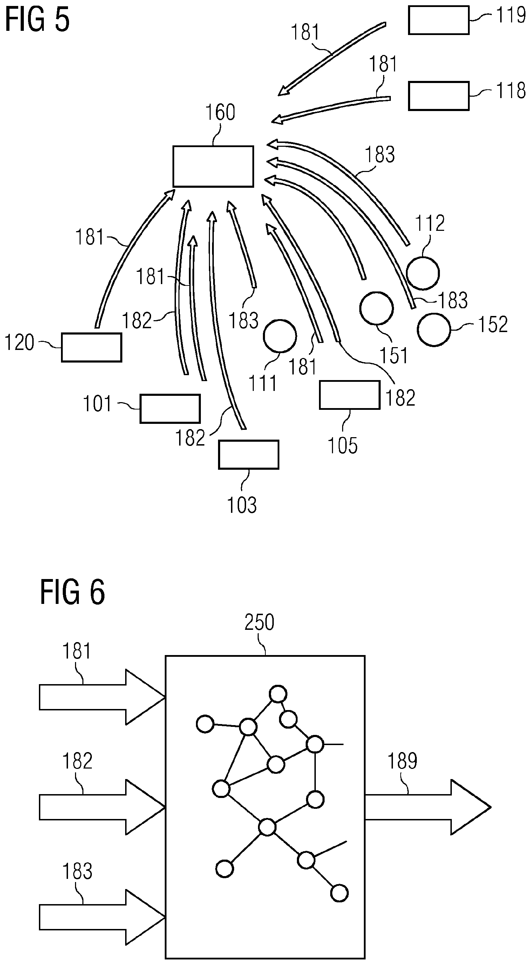

FIG. 5 illustriert schematisch Aspekte in Bezug auf eine Fusion von unterschiedlichen Daten des Automatisierungssystems. Aus FIG. 5 ist ersichtlich, dass von einer Teilmenge der Aktuatoren 101, 103, 105 Zustandsdaten 181 und/oder Steuerdaten 182 erhalten werden. Die Zustandsdaten 181 können einen Betriebszustand des jeweiligen Aktuators 101, 103, 105 beschreiben. Die Steuerdaten 182 können eine Art und Weise bzw. eine Stärke der Umweltbeeinflussung des jeweiligen Aktuators 101, 103, 105 beschreiben.

Außerdem werden von den Sensoren 111, 112, 151, 152 Sensordaten 183 erhalten. Die Sensordaten beschreiben die Umweltbeeinflussung des Automatisierungssystems 100.

In dem Beispiel der FIG. 5 werden ferner von den Hardware-Ressourcen 118, 119 Zustandsdaten 181 erfasst. Außerdem werden von der zentralen Steuereinheit 120 Zustandsdaten 181 erfasst.

Alle diese Daten 181, 182, 183 werden der Steuereinheit 160 bereitgestellt. Diese kann dann eine Fusion der Daten durchführen, d. h. einen Vergleich zwischen den verschiedenen Daten 181, 182, 183. Basierend auf diesem Vergleich kann die Integrität von Automatisierungssystemen überwacht werden. Das ist auch im Zusammenhang mit FIG. 6 dargestellt.

FIG. 6 illustriert Aspekte in Bezug auf das Vergleichen der verschiedenen Daten 181, 182, 183. FIG. 6 illustriert insbesondere eine Funktionsweise beispielsweise der Steuereinheit 160 oder der Steuereinheit 120 in Bezug auf das Überwachen der Integrität, wobei etwa Beeinträchtigungen der Integrität aufgrund von unzulässigem oder sogar unautorisiertem Fremdzugriff 90 erkannt werden können.

Aus FIG. 6 ist ersichtlich, dass ein Modell 250 für den Vergleich verwendet wird. Als Ergebnis wird ein Ergebnissignal 189 erhalten. Das Ergebnissignal 189 kann beispielsweise indikativ dafür sein, ob eine Beeinträchtigung der Integrität und/oder Fremdzugriff 90 vorliegt oder nicht. Das Ergebnissignal 189 könnte eine entsprechende Wahrscheinlichkeit indizieren. Das Ergebnissignal kann Warnungen und/oder Gegenmaßnahmen auslösen.

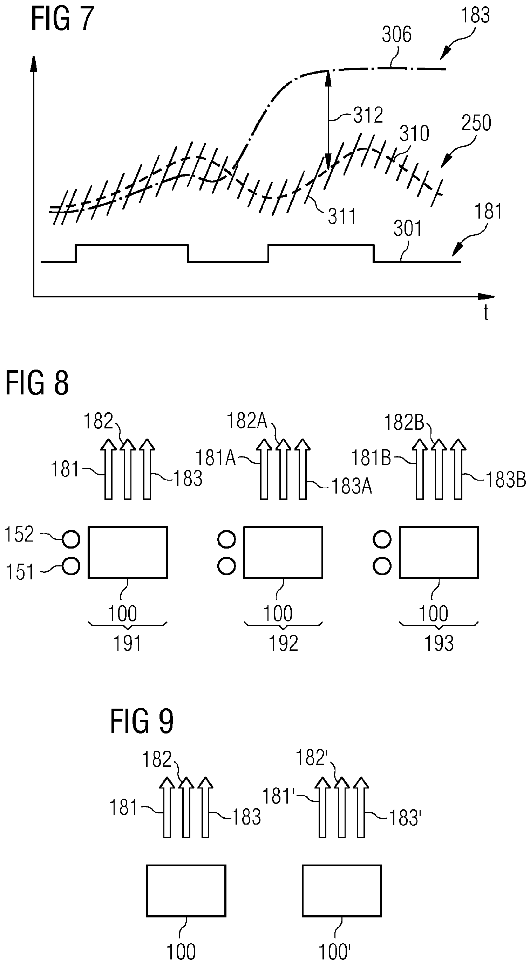

In manchen Beispielen kann ein deterministisches Modell 250 verwendet werden. Das deterministische Modell 250 kann vorgegeben sein und beispielsweise auf Grundlage von physikalischen Zusammenhängen bzw. der Architektur des Automatisierungssystems 100 erstellt werden. Es wäre zum Beispiel möglich, dass das Modell 250 als Funktion der Zustandsdaten 181 einen Plausibilitätsbereich von Sensordaten indiziert. Dann kann im Rahmen des Vergleichs überprüft werden, ob die Sensordaten eine Umweltbeeinflussung innerhalb dieses Plausibilitätsbereichs indizieren; ist dies nicht der Fall, kann von einer Beeinträchtigung der Integrität ausgegangen werden. Solche Techniken sind im Zusammenhang mit FIG. 7 illustriert.

FIG. 7 illustriert Aspekte in Bezug auf das Vergleichen von Zustandsdaten 181 und Sensordaten 183. Beispielsweise könnte eine entsprechende Funktionsweise durch das Modell 250 implementiert werden.

In dem Beispiel der FIG. 7 indizieren die Zustandsdaten 181 die Aktivität 301 eines Aktuators als Funktion der Zeit. In dem Beispiel der FIG. 7 schwankt die Aktivität des Aktuators 301 zwischen zwei Werten (durchgezogene Linie).

In FIG. 7 ist auch die Referenz 310 dargestellt, die auf Grundlage des Modells 250 basierend auf der Aktivität 301 erhalten wird (gepunktete Linie). Ein entsprechender Plausibilitätsbereich 311 ist schraffiert. Eine Abweichung aus dem Plausibilitätsbereich 311 könnte etwa im Zusammenhang mit einer Anomaliedetektion erkannt werden.

In FIG. 7 ist ferner der Zeitverlauf der durch die Sensordaten 183 gemessenen Umweltbeeinflussung 306, beispielsweise der Temperatur in der Umgebung des entsprechenden Aktuators, dargestellt. Es ist ersichtlich, dass ab einem gewissen Zeitpunkt der Abstand 312 zwischen der gemessenen Umweltbeeinflussung 306 einerseits und der Referenz 310 andererseits den Plausibilitätsbereich 311 verlässt; dort kann eine Beeinträchtigung der Integrität etwa aufgrund von Fremdzugriff 90 angenommen werden.

Ein entsprechendes Modell 250 kann nicht nur deterministisch abgeleitet werden, z.B. durch ein bei der Konstruktion einer Maschine oder Anlage erstelltes Digital-Twin-Simulationsmodell. Es könnten auch Techniken des maschinellen Lernens verwendet werden. Dieses im Zusammenhang mit FIG. 8 dargestellt.

FIG. 8 illustriert Aspekte in Bezug auf das Bestimmen der Referenz 310 bzw. des Modells 250. In FIG. 8 ist dargestellt, dass während einer Betriebsphase 191 die Daten 181, 182, 183 vom System 100 bzw. den Sensoren 151, 152 erhalten werden. Die Überwachung der Integrität erfolgt während der Betriebsphase.

Während zweier Lernphasen 192, 193 werden Referenz-Zustandsdaten 181A, 181B, sowie Referenz-Sensordaten 183A, 183B erhalten. Optional können auch Referenz-Steuerdaten 182A, 182B erhalten werden. Im Allgemeinen wird nur eine Lernphase benötigt.

Beispielsweise könnte die Lernphase 193 im Zusammenhang mit einem Rollout des Automatisierungssystems 100 definiert sein. Dort kann ein überwachter Betrieb erfolgen. Die Lernphase 192 könnte dem normalen Betrieb des Automatisierungssystems 100 entsprechen, d. h. historische Daten 181A, 182A, 183A beschreiben.

Es ist dann möglich, dass ein empirisches Modell 250 basierend aus einem Vergleich zwischen diesen Referenz-Daten 181A, 182A, 183A, 181B, 182B, 183B bestimmt wird. Dann kann die Referenz 310 insbesondere als Abweichung zum Normalbetrieb ermittelt werden. Ein aufwändiges Bestimmen eines deterministischen Modells entfällt. Außerdem können unterschiedliche Quellen für die Daten flexibel berücksichtigt werden, sodass eine Erweiterbarkeit des Modells 250 gefördert wird. Zum Beispiel könnte das empirische Bestimmen des Modells 250 durch Techniken des maschinellen Lernens erfolgen.

Alternativ oder zusätzlich zu einem solchen Definieren von Referenz-Daten im Zeitraum in Bezug auf die Lernphasen 192, 193 wäre es auch möglich, die Referenz 310 aus dem Betrieb eines weiteren Automatisierungssystems abzuleiten. Entsprechende Techniken sind im Zusammenhang mit der FIG. 9 illustriert.

FIG. 9 illustriert Aspekte in Bezug auf das Bestimmen der Referenz 310 bzw. des Modells 250. In FIG. 9 ist dargestellt, dass neben dem Überwachen des Betriebs des Automatisierungssystems 100 auch der Betrieb eines weiteren Automatisierungssystems 100' überwacht werden kann. Entsprechende Referenz-Zustandsdaten 181', Referenz-Steuerdaten 182' und Referenz-Sensordaten 183' können von dem weiteren Automatisierungssystem 100' erhalten werden. Derart kann die Referenz 310 ermittelt werden.

Selbstverständlich können die Merkmale der vorab beschriebenen Ausführungsformen und Aspekte der Erfindung miteinander kombiniert werden. Insbesondere können die Merkmale nicht nur in den beschriebenen Kombinationen, sondern auch in anderen Kombinationen oder für sich genommen verwendet werden, ohne das Gebiet der Erfindung zu verlassen.

Zum Beispiel können die hierein beschriebenen Techniken auch für die Überwachung der Integrität von anderen System eingesetzt werden, z.B. im Allgemeinen von Sensor-Aktuator-Systemen, etwa autonomen Maschinen usf.

Während obenstehend verschiedene Beispiele im Zusammenhang mit der Beeinträchtigung der Integrität von Automatisierungssystemen aufgrund von Fremdzugriff beschrieben wurden, wäre es in manchen anderen Beispielen aber auch möglich, die Beeinträchtigung der Integrität aufgrund von anderen auslösenden Ereignissen zu überwachen.

## Patentansprüche

1. Verfahren, das umfasst:
- Erhalten von Zustandsdaten (181) eines industriellen Automatisierungssystems (100), wobei die Zustandsdaten (181) den Betriebszustand (301) des Automatisierungssystems (100) beschreiben,
- Erhalten von Sensordaten (183), die eine Umweltbeeinflussung (306) des Automatisierungssystems (100) beschreiben, **gekennzeichnet durch**
- Durchführen eines Vergleichs zwischen den Zustandsdaten (181) und den Sensordaten (183), und
- basierend auf dem Vergleich: Überwachen der Integrität des Automatisierungssystems (100),
wobei das Verfahren weiterhin umfasst:
- Erhalten von Steuerdaten (182) für einen oder mehrere Aktuatoren (101-106) des Automatisierungssystems (100), welche die Umweltbeeinflussung (306) bewirken,
wobei der Vergleich zwischen den Zustandsdaten (181), den Sensordaten (183) und den Steuerdaten (182) durchgeführt wird.

2. Verfahren nach Anspruch 1,
wobei die Zustandsdaten (181) einen Zustand einer Betriebssoftware des Automatisierungssystems (100) umfassen.

3. Verfahren nach Anspruch 1 oder 2,
wobei die Zustandsdaten (181) zumindest ein Element der folgenden Gruppe umfassen:
- eine Komponentenregistrierung einer Vielzahl von aktiven Komponenten (101-106, 111, 112, 118, 119) des Automatisierungssystems (100);
- eine Komponentenaktivität einer Vielzahl von Komponenten (101-106, 111, 112, 118, 119) des Automatisierungssystems (100) ;
- ein Fehlerzustand einer Betriebssoftware des Automatisierungssystems (100);
- ein Parameter einer Kommunikationsschnittstelle des Automatisierungssystems (100); und
- eine Ressourcenbelegung von Computerhardware des Automatisierungssystems (100).

4. Verfahren nach einem der voranstehenden Ansprüche,
wobei der Vergleich eine Abweichung der Umweltbeeinflussung (306) von einer Referenz (310) berücksichtigt.

5. Verfahren nach Anspruch 4, das weiterhin umfasst:
- Bestimmen der Referenz (310) basierend auf einem vorgegebenen deterministischen Modell (250) und als Funktion der Zustandsdaten (181).

6. Verfahren nach Anspruch 5,
wobei das vorgegebene Modell (250) als Funktion der Zustandsdaten (181) einen Plausibilitätsbereich (311) der Sensordaten (183) indiziert.

7. Verfahren nach einem der Ansprüche 4 - 6, das weiterhin umfasst:
- Erhalten von Referenz-Zustandsdaten (181A, 181B) des Automatisierungssystems (100) in einer Lernphase (192, 193), wobei die Referenz-Zustandsdaten (181A, 181B) den Betriebszustand (301) des Automatisierungssystems (100) beschreiben,
- Erhalten von Referenz-Sensordaten (183A, 183B) in der Lernphase (192, 193), wobei die Referenz-Sensordaten (183A, 183B) die Umweltbeeinflussung (306) des Automatisierungssystems (100) beschreiben,
- Bestimmen eines empirischen Modells (250) der Umweltbeeinflussung (306) basierend auf dem Durchführen eines Vergleichs zwischen den Referenz-Zustandsdaten (181A, 181B) und den Referenz-Sensordaten (183A, 183B), und
- Bestimmen der Referenz (310) basierend auf dem empirischen Modell (250).

8. Verfahren nach Anspruch 7,
wobei das Bestimmen des empirischen Modells (250) mittels Techniken des maschinellen Lernens erfolgt.

9. Verfahren nach einem der Ansprüche 4 - 8, das weiterhin umfasst:
- Überwachen des Betriebs eines weiteren industriellen Automatisierungssystems (100'),
- Bestimmen der Referenz (310) basierend auf dem Überwachen des Betriebs des weiteren industriellen Automatisierungssystems (100').

10. Verfahren nach einem der voranstehenden Ansprüche,
wobei das Durchführen des Vergleichs das Durchführen einer Anomaliedetektion von mit den Zustandsdaten korrelierten Sensordaten (183) umfasst.

11. Verfahren nach einem der voranstehenden Ansprüche, das weiterhin umfasst:
- in Abhängigkeit von dem Überwachen v: Erstellen einer Protokolldatei, die einen Status des Überwachens mit Seriennummern von Produkten des Automatisierungssystems (100) korreliert.

12. Verfahren nach einem der voranstehenden Ansprüche, das weiterhin umfasst:
- in Abhängigkeit von dem Überwachen: Ausgeben einer Warnung über eine Benutzerschnittstelle und/oder Überführen des Betriebs des Automatisierungssystems (100) in einen Schutzzustand.

13. Steuereinheit (120, 160) die mindestens einen Prozessor umfasst, der eingerichtet ist, um die folgenden Schritte auszuführen:
- Erhalten von Zustandsdaten (181) eines industriellen Automatisierungssystems (100), wobei die Zustandsdaten (181) den Betriebszustand (301) des Automatisierungssystems (100) beschreiben,
- Erhalten von Sensordaten (183), die eine Umweltbeeinflussung (306) des Automatisierungssystems (100) beschreiben, **gekennzeichnet durch**
- Durchführen eines Vergleichs zwischen den Zustandsdaten (181) und den Sensordaten (183), und
- basierend auf dem Vergleich: Überwachen der Integrität des Automatisierungssystems (100),
um weiterhin folgenden Schritt auszuführen:
- Erhalten von Steuerdaten (182) für einen oder mehrere Aktuatoren (101-106) des Automatisierungssystems (100), welche die Umweltbeeinflussung (306) bewirken,
wobei der Vergleich zwischen den Zustandsdaten (181), den Sensordaten (183) und den Steuerdaten (182) durchgeführt wird.

14. Steuereinheit (120, 160) nach Anspruch 13,
wobei der mindestens eine Prozessor eingerichtet ist, um das Verfahren nach einem der Ansprüche 2 - 12 auszuführen.

15. Computerprogramm umfassend Programm-Code, der von mindestens einem Prozessor ausgeführt werden kann und der bewirkt, dass der mindestens eine Prozessor das Verfahren nach einem der Ansprüche 1 - 12 ausführt.

## Claims

1. Method which comprises:
- obtaining state data (181) relating to an industrial automation system (100), wherein the state data (181) describe the operating state (301) of the automation system (100),
- obtaining sensor data (183) which describe an environmental impact (306) of the automation system (100), **characterized by**
- carrying out a comparison between the state data (181) and the sensor data (183), and
- on the basis of the comparison: monitoring the integrity of the automation system (100),
wherein the method also comprises:
- obtaining control data (182) for one or more actuators (101-106) of the automation system (100) which cause the environmental impact (306),
wherein the comparison is carried out between the state data (181), the sensor data (183) and the control data (182).

2. Method according to Claim 1,
wherein the state data (181) comprise a state of operating software of the automation system (100).

3. Method according to Claim 1 or 2,
wherein the state data (181) comprise at least one element from the following group:
- a component registration of a multiplicity of active components (101-106, 111, 112, 118, 119) of the automation system (100);
- a component activity of a multiplicity of components (101-106, 111, 112, 118, 119) of the automation system (100);
- a fault state of operating software of the automation system (100);
- a parameter of a communication interface of the automation system (100); and
- a resource allocation of computer hardware of the automation system (100).

4. Method according to one of the preceding claims,
wherein the comparison takes into account a deviation of the environmental impact (306) from a reference (310).

5. Method according to Claim 4, which also comprises:
- determining the reference (310) on the basis of a predefined deterministic model (250) and as a function of the state data (181).

6. Method according to Claim 5,
wherein the predefined model (250) indicates a plausibility range (311) of the sensor data (183) as a function of the state data (181).

7. Method according to one of Claims 4-6, which also comprises:
- obtaining reference state data (181A, 181B) relating to the automation system (100) in a learning phase (192, 193), wherein the reference state data (181A, 181B) describe the operating state (301) of the automation system (100),
- obtaining reference sensor data (183A, 183B) in the learning phase (192, 193), wherein the reference sensor data (183A, 183B) describe the environmental impact (306) of the automation system (100),
- determining an empirical model (250) of the environmental impact (306) on the basis of carrying out a comparison between the reference state data (181A, 181B) and the reference sensor data (183A, 183B), and
- determining the reference (310) on the basis of the empirical model (250).

8. Method according to Claim 7,
wherein the empirical model (250) is determined using machine learning techniques.

9. Method according to one of Claims 4-8, which also comprises:
- monitoring the operation of a further industrial automation system (100'),
- determining the reference (310) on the basis of the monitoring of the operation of the further industrial automation system (100').

10. Method according to one of the preceding claims,
wherein the process of carrying out the comparison comprises carrying out an anomaly detection of sensor data (183) correlated with the state data.

11. Method according to one of the preceding claims, which also comprises:
- on the basis of the monitoring: creating a log file which correlates a status of the monitoring process with serial numbers of products of the automation system (100).

12. Method according to one of the preceding claims, which also comprises:
- on the basis of the monitoring: outputting a warning via a user interface and/or changing the operation of the automation system (100) to a protective state.

13. Control unit (120, 160) which comprises at least one processor which is set up to carry out the following steps:
- obtaining state data (181) relating to an industrial automation system (100), wherein the state data (181) describe the operating state (301) of the automation system (100),
- obtaining sensor data (183) which describe an environmental impact (306) of the automation system (100), **characterized by**
- carrying out a comparison between the state data (181) and the sensor data (183), and
- on the basis of the comparison: monitoring the integrity of the automation system (100)
in order to also carry out the following step of:
- obtaining control data (182) for one or more actuators (101-106) of the automation system (100) which cause the environmental impact (306),
wherein the comparison is carried out between the state data (181), the sensor data (183) and the control data (182).

14. Control unit (120, 160) according to Claim 13,
wherein the at least one processor is set up to carry out the method according to one of Claims 2-12.

15. Computer program comprising program code which can be executed by at least one processor and causes the at least one processor to carry out the method according to one of Claims 1-12.

## Revendications

1. Procédé qui comprend :
- l'obtention de données d'état (181) d'un système d'automatisation industriel (100), dans lequel les données d'état (181) décrivent l'état de fonctionnement (301) du système d'automatisation (100) ;
- l'obtention de données de détection (183) qui décrivent une incidence sur l'environnement (306) du système d'automatisation (100) ; **caractérisé par**
- la mise en oeuvre d'une comparaison entre les données d'état (181) et les données de détection (183) ; et
- en se basant sur la comparaison : la surveillance de l'intégrité du système d'automatisation (100) ;
dans lequel le procédé comprend en outre :
- l'obtention de données de commande (182) pour un ou plusieurs actionneurs (101-106) du système d'automatisation (100) qui produisent l'incidence sur l'environnement (306) ;
- dans lequel la comparaison est mise en oeuvre entre les données d'état (181), les données de détection (183) et les données de commande (182).

2. Procédé selon la revendication 1, dans lequel les données d'état (181) comprennent un état d'un logiciel d'exploitation du système d'automatisation (100).

3. Procédé selon la revendication 1 ou 2, dans lequel les données d'état (181) comprennent au moins un élément choisi parmi le groupe suivant :
- un enregistrement de composant parmi une pluralité de composants actifs (101-106, 111, 112, 118, 119) du système d'automatisation (100) ;
- une activité de composant parmi une pluralité de composants (101-106, 111, 112, 118, 119) du système d'automatisation (100) ;
- un état de défaut d'un logiciel d'exploitation du système d'automatisation (100) ;
- un paramètre d'une interface de communication du système d'automatisation (100) ; et
- une acquisition de ressources de matériel informatique du système d'automatisation (100).

4. Procédé selon l'une quelconque des revendications précédentes, dans lequel la comparaison prend en compte une déviation de l'incidence sur l'environnement (306) par rapport à une référence (310).

5. Procédé selon la revendication 4, qui comprend en outre :
- une détermination de la référence (310) en se basant sur un modèle déterministe préétabli (250) et en fonction des données d'état (181).

6. Procédé selon la revendication 5, dans lequel le modèle préétabli (250) indique un domaine de plausibilité (311) des données de détection (183) en fonction des données d'état (181).

7. Procédé selon l'une quelconque des revendications 4 à 6, qui comprend en outre :
- l'obtention de données d'état de référence (181A, 181B) du système d'automatisation (100) dans une phase d'apprentissage (192, 193) ; dans lequel les données d'état de référence (181A, 181B) décrivent l'état de fonctionnement (301) du système d'automatisation (100) ;
- l'obtention de données de détection de référence (183A, 183B) dans la phase d'apprentissage (192, 193) ; dans lequel les données de détection de référence (183A, 183B) décrivent l'incidence sur l'environnement (306) du système d'automatisation (100) ;
- la détermination d'un modèle empirique (250) de l'incidence sur l'environnement (306) en se basant sur la mise en oeuvre d'une comparaison entre les données d'état de référence (181A, 181B) et les données de détection de référence (183A, 183B) ; et
- la détermination de la référence (310) en se basant sur le modèle empirique (250).

8. Procédé selon la revendication 7, dans lequel la détermination du modèle empirique (250) a lieu au moyen de techniques de l'apprentissage automatique.

9. Procédé selon l'une quelconque des revendications 4 à 8, qui comprend en outre :
- la surveillance de l'exploitation d'un système d'automatisation industriel supplémentaire (100') ;
- la détermination de la référence (310) en se basant sur la surveillance de l'exploitation du système d'automatisation industriel supplémentaire (100').

10. Procédé selon l'une quelconque des revendications précédentes, dans lequel la mise en oeuvre de la comparaison comprend la mise en oeuvre d'une détection d'une anomalie dans les données de détection (183) mises en corrélation avec les données d'état.

11. Procédé selon l'une quelconque des revendications précédentes, qui comprend en outre :
- en fonction de la surveillance v : l'élaboration d'un fichier journal qui met en corrélation un état de la surveillance avec des numéros de série de produits du système d'automatisation (100).

12. Procédé selon l'une quelconque des revendications précédentes, qui comprend en outre :
- en fonction de la surveillance : l'émission d'une alerte via une interface utilisateur et/ou le transfert de l'exploitation du système d'automatisation (100) à un état de protection.

13. Unité de commande (120, 160) qui comprend au moins un processeur qui est conçu pour mettre en oeuvre les étapes suivantes :
- l'obtention de données d'état (181) d'un système d'automatisation industriel (100), dans lequel les données d'état (181) décrivent l'état de fonctionnement (301) du système d'automatisation (100) ;
- l'obtention de données de détection (183) qui décrivent une incidence sur l'environnement (306) du système d'automatisation (100) ; **caractérisée par**
- la mise en oeuvre d'une comparaison entre les données d'état (181) et les données de détection (183) ; et
- en se basant sur la comparaison : la surveillance de l'intégrité du système d'automatisation (100) ;
pour en outre la mise en oeuvre de l'étape suivante :
- l'obtention de données de commande (182) pour un ou plusieurs actionneurs (101-106) du système d'automatisation (100) qui produisent l'incidence sur l'environnement (306) ;
- dans laquelle la comparaison est mise en oeuvre entre les données d'état (181), les données de détection (183) et les données de commande (182).

14. Unité de commande (120, 160) selon la revendication 13, dans laquelle ledit au moins un processeur est conçu pour la mise en oeuvre du procédé selon l'une quelconque des revendications 2 à 12.

15. Programme informatique comprenant un code de programme qui peut être exécuté par au moins un processeur et qui fait en sorte que ledit au moins un processeur mette en oeuvre le procédé selon l'une quelconque des revendications 1 à 12.
